# EUROPEAN PATENT SPECIFICATION

(11) **EP 2 508 272 B1**
(45) Date of publication and mention of the grant of the patent: **18.09.2013**
(21) Application number: 12163217.8
(22) Date of filing: 04.04.2012
(51) Int. Cl.: B21C 25/02

(54) **Extruder die**
Strangpressmatrize
Filière d'extrusion

(30) Priority: 04.04.2011 GB 201105644
(43) Date of publication of application: 10.10.2012
(73) Proprietor: Eroga Die Company Limited, Gloucester GL4 3DB (GB)
(72) Inventor: Townsend, Alan, Cheltenham, Gloucestershire GL51 0SS (GB)
(74) Representative: Hocking, Adrian Niall

(56) References cited:
- WO-A1-97/02910
- JP-A- 5 007 926
- JP-A- 2010 179 345
- US-A- 5 095 734

## Description

The present invention relates to a die for an extruder, and more particularly to a die suitable for extruding metals, such as aluminium.

A die according to the preamble of claim 1 is e.g. known from US-A-5 095 734.

During extrusion, pressure imparted to the die varies according to the speed of movement of the material through the die. High pressure results in imperfections and inconsistencies in the extruded article. However, a lower pressure equates to better speed of material passing through the die and thus a decrease in productivity. By altering the bearing length through the die aperture, the pressure and speed can be optimised.

However, variation of the bearing length and other characteristics of the die aperture is still complex and often requires an operator with years of experience to be able to judge which alterations to implement and which to not.

The present invention seeks to provide a solution to these problems.

According to the present invention, there is provided an extruder die comprising a die cavity having opposing walls defining first and second lands of different bearing lengths, each land including a leading flat portion which extends in parallel or substantially parallel with the leading flat portion of the other land and a trailing negatively tapered bridge portion following the leading flat portion, the negatively tapered bridge portion of one land being axially offset relative to the other negatively tapered bridge portion of the other land.

Preferable and/or optional features of the invention are set forth in claims 2 to 11, inclusive.

The invention will now be more particularly described, by way of example only, with reference to the accompanying drawings, in which :
Figure 1 shows a diagrammatic cross-sectional view of a first embodiment of a die cavity of an extruder die, in accordance with the present invention;
Figure 2 shows a diagrammatic cross-sectional view of a second embodiment of a die cavity of an extruder die, in accordance with the present invention; and
Figure 3 shows a diagrammatic cross-sectional view of a third embodiment of a die cavity of an extruder die, in accordance with the present invention.

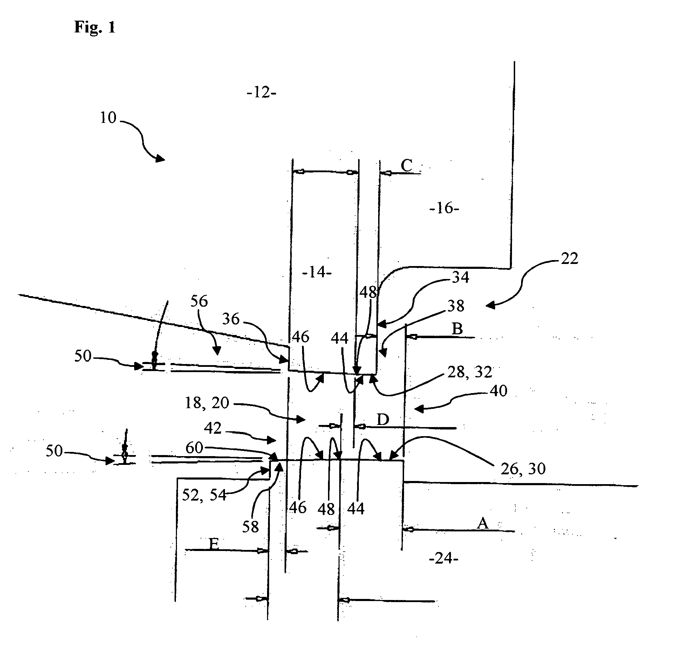

Referring firstly to Figure 1 of the drawings, there is shown a first embodiment of an extruder die 10 which comprises a die body 12 having a back plate 14 and a front plate 16 which is rigidly held, for example by clamping, to the back plate 14. Although the back and front plates 14, 16 are utilised, the die body 12 may be one-piece. To improve the wear resistance characteristics of the die 10, it may be subjected to a nitriding process, for example.

The back plate 14 includes a die cavity 18 formed therein and providing a die aperture 20 therethrough. The die cavity 18 is shaped to the required lateral cross-sectional shape of the extrusion.

The front plate 16 provides a preform chamber 22 which is generally similar in shape to and upstream of the die cavity 18. However, the overall dimensions of the preform chamber 22 in a plane perpendicular to the flow direction through the die aperture 20 are generally greater than those of the die cavity 18, in the order of 50% or more radially outwardly from or laterally of the die cavity 18. Although the radial extent of the preform chamber 22 relative to the die cavity 18 may be similar on the radially inwards core 24 or mandrel of the die 10, in this case as can be seen in the drawing, it is typically less than 50% and may be only, for example, 10%.

The die cavity 18 includes opposing inner and outer walls 26, 28 provided on the die core 24 and the outer die body 12, respectively. The inner wall 26 defines a first land 30, and the outer wall 28 defines a second land 32. The two lands 30, 32 are of different lengths in the flow direction, with the first land 30 being longer than the second land 32 so as to overlap the front edge 34 and back edge 36 of the second land 32. This provides an increased loading area and results in a stepped or laterally offset entry chamber 38 in the preform chamber 22 leading to the inlet 40 of the die cavity 18. Furthermore, the extended first land 30 provides a stepped exit chamber 42 at the outlet of the die cavity 18.

The first land 30 and second land 32 each include a leading flat portion 44 and a trailing negatively tapered bridge portion 46. In this case, the leading flat portion 44 and the trailing negatively tapered bridge portion 46 are contiguous with each other in the flow direction through the die cavity 18.

The leading flat portions 44 of the lands 30, 32 extend in parallel or substantially parallel with a central axis of the die cavity 18, and are parallel or substantially parallel with each other. The leading flat portion 44 of the first land 30 also preferably overlaps the front and rear edges 34, 36 of the leading flat portion 44 of the second land 32. In this embodiment, the leading flat portion 44 of the first land 30 is preferably in the range of 0.7mm to 1.4mm, referenced as A. More preferably, the front edge overlap of the first land 30 provides the stepped entry chamber 38 and is preferably in the range of 0.3mm to 1.0mm, referenced as B.

The leading flat portion 44 of the second land 32 preferably has a bearing surface of or substantially of 0.3mm, referenced as C.

The rear edge 48 of the leading flat portion 44 of the first land 30 preferably overlaps the rear edge 48 of the leading flat portion 44 of the second land 32 by 0.10mm, referenced as D. This is beneficial to compensate for minor deflection of the second land 32 during use.

Turning to the bridge portions 46 of the first and second lands 30, 32, both bridge portions 46 include a relief 50 along their longitudinal extents which is at least in the range of 1 degree to 1.5 degrees. In this way, the die cavity 18 includes a negative taper causing the die aperture 20 to enlarge from the leading flat portion 44 to the back end 52. The trailing edge 54 of the negative taper of the die cavity 18 is preferably stepped to the enlarged exit cavity 56, which is also in this case divergently tapered in the downstream direction of the die 10.

The bridge portions 46 may be of matching or substantially matching longitudinal extents, and the bridge portion 46 of the first land 30 is offset, referenced as 58, in the downstream direction relative to the bridge portion 46 of the second land 32, typically by at least 0.10mm, referenced as E. This offset enables the first land 30 to provide a projecting exit bridge portion 60 at the back end of the die cavity 18. The exit cavity 56, similarly to the preform chamber 22, therefore exhibits a non-uniform depth. The exit bridge portion 60 may have a greater relief or negative taper than the remainder of the bridge portion 46 upstream thereof. This again results in reduced pressure on the extruded material exiting the die cavity 18.

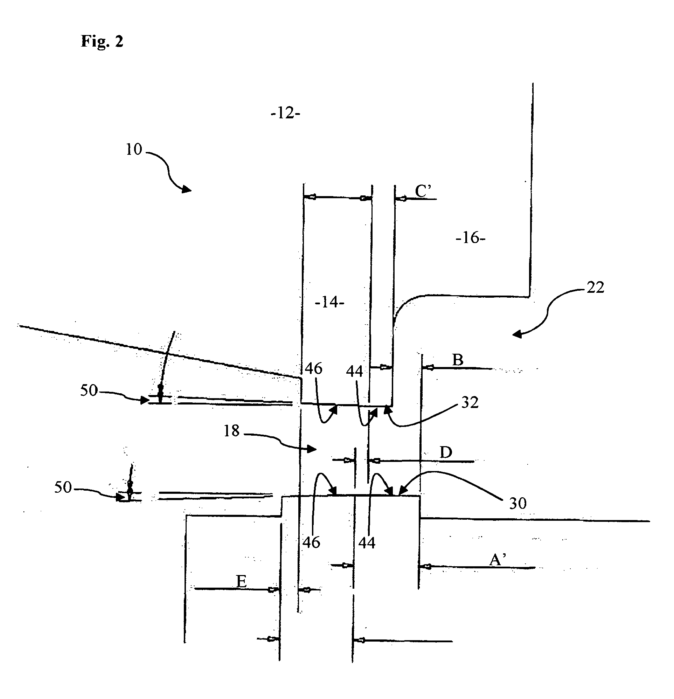

Referring now to Figure 2, a second embodiment of an extruder die is shown. References which correspond to those of the first embodiment relate to similar parts, and further detailed description is therefore omitted.

The extruder die 10 of this embodiment again comprises a die body 12 having back and front plates 14, 16. A die cavity 18 is provided with first and second lands 30, 32, the first land 30 being extended to overlap the front and back edges 34, 36 of the second land 32. Each land 30, 32 includes leading flat portions 44 of different bearing lengths and trailing misaligned negatively tapered bridge portions 46.

In this case, the leading flat portion 44 of the first land 30 is increased, preferably being in a range of 1.4mm to 2.1mm, referenced as A', and the leading flat portion 44 of the second land 32 is increased preferably to or substantially to a bearing length of 1.0mm, referenced as C'.

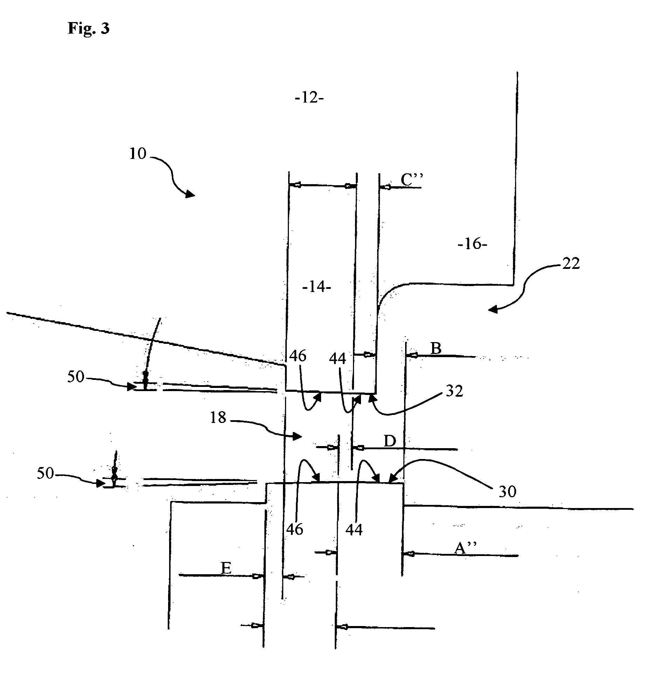

Figure 3 shows a third embodiment of an extruder die, and again references which correspond to those of the first embodiment relate to similar parts, and further detailed description is therefore omitted.

The extruder die 10 of this embodiment, similarly to the second embodiment, comprises a die body 12 having back and front plates 14, 16. A die cavity 18 is provided with first and second lands 30, 32, and the first land 30 is extended to overlap the front and back edges 34, 36 of the second land 32. Each land 30, 32 includes leading flat portions 44 of different bearing lengths, and trailing negatively tapered bridge portions 46 are again misaligned.

The leading flat portion 44 of the first land 30 is further increased, preferably being in a range of 2.4mm to 3.1mm, referenced as A", and the leading flat portion 44 of the second land 32 is increased preferably to or substantially to a bearing length of 2.0mm, referenced as C.

In the second and third embodiments, by increasing the bearing lengths of the leading flat portions together, preferably the loading area within the entry chamber of the perform chamber remains constant or substantially constant.

The greater longitudinal extent of the die cavities in the second and third embodiments above provide improved resistance to deflection and thus can accept higher loading. This is beneficial for accommodating different extrusion shapes.

By misaligning or axially offsetting the opposing bridge portions of the first and second lands whilst also including or providing the option of part- or substantially part-bearing surfaces, it is thus possible to compensate for slight deflection of the lands during use and/or compression of the die plates whilst also improving the running of the material through the die cavity. Such deflection of one or both lands effectively dynamically increases the negative taper of the exit chamber during use. These factors consequently decrease the imparted pressure and thus improve extrusion speed whilst maintaining or improving extrusion quality. It is also possible to provide a modular extruder die having front and back plates which can be selected dependent on necessity, the shape of the extrusion, the required finish, and the material used.

The embodiments described above are provided by way of examples only, and various modifications will be apparent to persons skilled in the field without departing from the scope of the invention as defined by the appended claims.

## Claims

1. An extruder die (10) comprising a die cavity (18) having opposing walls defining first and second lands (30, 32) each land (30, 32) including a leading flat portion (44) which extends in parallel or substantially parallel with the leading flat portion (44) of the other land (30, 32) and a trailing negatively tapered bridge portion (46) following the leading flat portion (44), the negatively tapered bridge portion (46) of one land (30) being axially offset (58) relative to the other negatively tapered bridge portion (46) of the other land (32), **characterised in that** the first and second lands (30, 32) are of different bearing lengths.

2. An extruder die (10) as claimed in claim 1, wherein the trailing negatively tapered bridge portion (46) of one land (30) extends beyond a rear edge (48) of the trailing negatively tapered bridge portion (46) of the other land (32) to define an exit bridge portion (60).

3. An extruder die (10) as claimed in claim 1 or claim 2, wherein the trailing negatively tapered bridge portions (46) have the same or substantially same relief angle.

4. An extruder die (10) as claimed in any one of claims 1 to 3, wherein the leading flat portion (44) of one land (30) overlaps in the flow direction the negatively tapered bridge portion (46) of the other land (32).

5. An extruder die (10) as claimed in any one of claims 1 to 4, wherein the leading flat portion (44) of one land (30) projects forwardly of the leading flat portion (44) of the other land (32).

6. An extruder die (10) as claimed in any one of claims 1 to 5, further comprising a preform chamber (22) upstream of the die cavity (18).

7. An extruder die (10) as claimed in claim 6, wherein the preform chamber (22) is of non-uniform depth.

8. An extruder die (10) as claimed in claim 6 or claim 7, wherein the preform chamber (22) defines an offset entry chamber (38) to the die cavity (18).

9. An extruder die (10) as claimed in any one of claims 1 to 8, further comprising an exit chamber (42) downstream of the die cavity (18).

10. An extruder die (10) as claimed in claim 9, wherein the exit chamber (42) is of non-uniform depth.

11. An extruder die (10) as claimed in claim 9 or claim 10, wherein at least one wall of the exit chamber (42) includes a tapered portion at an angle to the axial centreline of the die cavity (18).

## Patentansprüche

1. Extruderdüse (10), umfassend einen Düsenhohlraum (18) mit gegenüberliegenden Wänden, die erste und zweite Stege (30, 32) definieren, wobei jeder Steg (30, 32) einen vorlaufenden flachen Abschnitt (44), der sich parallel oder im Wesentlichen parallel zum vorlaufenden flachen Abschnitt (44) des anderen Stegs (30, 32) erstreckt, und einen nachlaufenden negativ verjüngten Brückenabschnitt (46) enthält, der dem vorlaufenden flachen Abschnitt (44) folgt, wobei der negativ verjüngte Brückenabschnitt (46) eines Stegs (30) in Bezug auf den anderen negativ verjüngten Brückenabschnitt (46) des anderen Stegs (32) axial versetzt (58) sind,
**dadurch gekennzeichnet, dass** die ersten und zweite Stege (30, 32) unterschiedliche tragende Längen aufweisen.

2. Extruderdüse (10) nach Anspruch 1, wobei sich der nachlaufende negativ verjüngte Brückenabschnitt (46) eines Stegs (30) über einen hinteren Rand (48) des nachlaufenden negativ verjüngten Brückenabschnitts (46) des anderen Stegs (32) hinaus erstreckt, um einen Austrittbrückenabschnitt (60) zu definieren.

3. Extruderdüse (10) nach Anspruch 1 oder 2, wobei die nachlaufenden negativ verjüngten Brückenabschnitte (46) den gleichen oder im Wesentlichen den gleichen Freiwinkel aufweisen.

4. Extruderdüse (10) nach einem der Ansprüche 1 bis 3, wobei der vorlaufende flache Abschnitt (44) eines Stegs (30) den negativ verjüngten Brückenabschnitt (46) des anderen Stegs (32) in Strömungsrichtung überlappt.

5. Extruderdüse (10) nach einem der Ansprüche 1 bis 4, wobei der vorlaufende flache Abschnitt (44) eines Stegs (30) vorwärts des vorlaufenden flachen Abschnitts (44) des anderen Stegs (32) vorspringt.

6. Extruderdüse (10) nach einem der Ansprüche 1 bis 5, ferner umfassend eine Vorformungskammer (22), die dem Düsenhohlraum (18) vorgeschaltet angeordnet ist.

7. Extruderdüse (10) nach Anspruch 6, wobei die Vorformungskammer (22) eine nicht-einheitliche Tiefe aufweist.

8. Extruderdüse (10) nach Anspruch 6 oder 7, wobei die Vorformungskammer (22) eine versetzte Eintrittskammer (38) in den Düsenhohlraum (18) definiert.

9. Extruderdüse (10) nach einem der Ansprüche 1 bis 8, ferner umfassend eine Austrittskammer (42), die dem Düsenhohlraum (18) nachgeschaltet ist.

10. Extruderdüse (10) nach Anspruch 9, wobei die Austrittskammer (42) eine nicht-einheitliche Tiefe aufweist.

11. Extruderdüse (10) nach Anspruch 9 oder 10, wobei zumindest eine Wand der Austrittskammer (42) einen verjüngten Abschnitt in einem Winkel zu einer axialen Mittellinie des Düsenhohlraums (18) enthält.

## Revendications

1. Filière d'extrusion (10) comprenant une cavité de filière (18) ayant des parois opposées définissant des première et seconde parallèles (30, 32), chaque parallèle (30, 32) comprenant une partie plate avant (44) qui s'étend parallèlement ou sensiblement parallèlement à la partie plate avant (44) de l'autre parallèle (30, 32) et une partie pont effilée négativement arrière (46) suivant la partie plate avant (44), la partie pont effilée négativement (46) d'une parallèle (30) étant axialement décalée (58) par rapport à l'autre partie pont effilée négativement (46) de l'autre parallèle (32), **caractérisée par le fait que** les première et seconde parallèles (30, 32) sont de différentes longueurs de portée.

2. Filière d'extrusion (10) selon la revendication 1, dans laquelle la partie pont effilée négativement arrière (46) d'une parallèle (30) s'étend au-delà d'un bord arrière (48) de la partie bond effilée négativement arrière (46) de l'autre parallèle (32) pour définir une partie pont de sortie (60).

3. Filière d'extrusion (10) selon l'une des revendications 1 ou 2, dans laquelle les parties ponts effilées négativement arrière (46) ont le même ou sensiblement le même angle de dépouille.

4. Filière d'extrusion (10) selon l'une quelconque des revendications 1 à 3, dans laquelle la partie plate avant (44) d'une parallèle (30) chevauche dans la direction d'écoulement la partie pont effilée négativement (46) de l'autre parallèle (32).

5. Filière d'extrusion (10) selon l'une quelconque des revendications 1 à 4, dans laquelle la partie plate avant (44) d'une parallèle (30) se projette en avant de la partie plate avant (44) de l'autre parallèle (32).

6. Filière d'extrusion (10) selon l'une quelconque des revendication 1 à 5, comprenant en outre une chambre de préforme (22) en amont de la cavité de filière (18) .

7. Filière d'extrusion (10) selon la revendication 6, dans laquelle la chambre de préforme (22) a une profondeur non uniforme.

8. Filière d'extrusion (10) selon l'une des revendications 6 ou 7, dans laquelle la chambre de préforme (22) définit une chambre d'entrée décalée (38) à la cavité de filière (18).

9. Filière d'extrusion (10) selon l'une quelconque des revendications 1 à 8, comprenant en outre une chambre de sortie (42) en aval de la cavité de filière (18).

10. Filière d'extrusion (10) selon la revendication 9, dans laquelle la chambre de sortie (42) a une profondeur non uniforme.

11. Filière d'extrusion (10) selon l'une des revendications 9 ou 10, dans laquelle au moins une paroi de la chambre de sortie (42) comprend une partie effilée à un angle par rapport à la ligne médiane axiale de la cavité de filière (18).
